# EUROPEAN PATENT SPECIFICATION

(11) **EP 1 004 218 B1**
(45) Date of publication and mention of the grant of the patent: **17.03.2004**
(21) Application number: 98935167.1
(22) Date of filing: 20.07.1998
(51) Int. Cl.: H04Q 11/00

(54) **METHOD FOR TRANSMITTING DATA ACROSS ATM NETWORKS OF DIFFERENT TYPES**
VERFAHREN ZUR ÜBERTRAGUNG VON DATEN ÜBER ATM NETZWERKE UNTERSCHIEDLICHEN TYPS
PROCEDE POUR LA TRANSMISSION DES DONNEES PAR DES RESEAUX ATM DE TYPES DIFFERENTS

(30) Priority: 22.07.1997 US 903227; 27.02.1998 GB 9804107
(43) Date of publication of application: 31.05.2000
(73) Proprietor: Nortel Networks Limited, St. Laurent, Quebec H4S 2A9 (CA)
(72) Inventor: CAVES, Keith, Sawbridgewoerth, Herts CM21 9LF (GB)
(74) Representative: Anderson, Angela
(86) International application number: PCT/GB1998/002160
(87) International publication number: WO 1999/005881

(56) References cited:
- GB-A- 2 294 840
- GB-A- 2 299 240
- US-A- 5 390 175

## Description

This invention relates to a system and method for the transport of voice or data traffic over a telecommunications network.

### BACKGROUND OF THE INVENTION

A recent innovation in telecommunications technology has been the introduction of the asynchronous transfer mode (ATM) transmission protocol. In this technique, information to be transmitted is loaded into packets or cells each of which is provided with a header containing information that is used for routing the cell to its correct destination. The header packet or cell may also contain other protocol control information relating to the cell payload and, in particular may include a cell sequence number so that cells received at a destination, possibly via different routes, may be unpacked in the correct order to recover the payload contents. The sequence number can also be used to indicate missing cells.

As the technique has developed, ATM networks have evolved to handle different types of traffic, for example narrow band voice, wide band video and low bit-rate multi-user. Each particular network traffic type is adapted to its traffic content in an ATM network by the use of an ATM adaptation layer (AAL) a number of which have been defined. For example, ATM adaptation layer type 1 (AAL-1) enables the transfer of n x 64 kbit/s structured data between source and destination whilst preserving the structure information, ATM adaptation layer type 2 (AAL-2) provides the ability to encapsulate, multiplex and transport packets of user information inside an ATM cell stream, and so on.

Arrangements for conveying narrow band traffic between ATM switches in a communications network are described in specification No. GB-A-2,299,240. Arrangements for interfacing a PBX and an ATM network are described in specification No. GB 2 294 840 A. The transport of PCM signals over an ATM network is described in specification No. US 5 390 175 A.

With increasing volumes and variety of traffic, there is now a need for interworking between services supported by different adaptation layers. In particular, there is a need to transmit traffic across ATM networks of different types.

### SUMMARY OF THE INVENTION

It is an object of the invention to provide an arrangement and method for transmitting traffic from one ATM network to another ATM network of a different type.

It is a further object of the invention to provide an arrangement and method for transmitting traffic between narrow band networks via first and second ATM networks.

According to the invention there is provided a method of transporting structured data comprising blocks or frames from a first narrow band network to a second narrow band network over an asynchronous network arrangement incorporating a first ATM network having a first adaptation layer protocol, said first ATM network having embedded therein a second ATM network having a second adaptation layer protocol, the method being characterised by the steps of:
at the first ATM network, segmenting the structured data into first ATM cells structured to said first protocol;
providing in one cell of a cycle of eight of said first ATM cells a pointer field indicating the start of a block or frame following the pointer field;
at the second ATM network, segmenting said first ATM cells into second ATM cells structured to said second protocol; and
providing in said second ATM cells a further pointer, said further pointer identifying the position of said pointer field within the second ATM cells.

The structured data can incorporate voice signals which have been digitised and which are in e.g. a TDM format.

### BRIEF DESCRIPTION OF THE DRAWINGS

Embodiments of the invention will now be described with reference to the accompanying drawings in which:-
Figure 1 is a schematic diagram illustrating the structuse of the ATM adaption layer 1 (AAL-1);
Figure 2 is a schematic diagram illustrating the stucture of the ATM adaption layes 2 (AAL-2);
Figure 3 shows an arrangement according to an embodiment of the invention for providing interworking between AAL1 and AAL2 networks;
Figure 4 illustrates a first method of mapping AAL1 to AAL2 in the network arrangement of figure 3; and
Figure 5 illustrates a second method of mapping AAL1 to AAL2 in the network arrangement of figure 3.

### DESCRIPTION OF PREFERRED EMBODIMENT

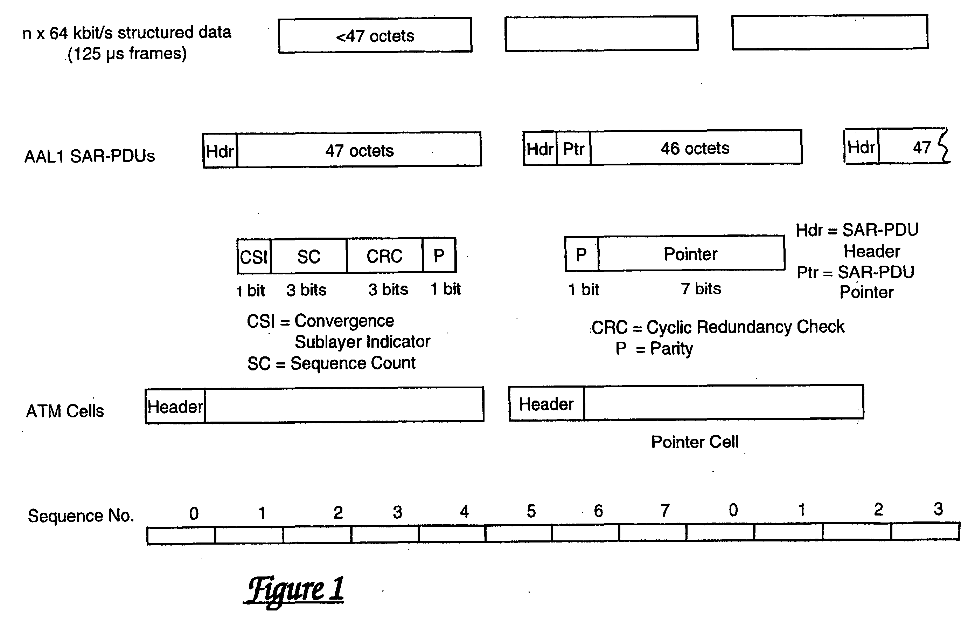

Referring first to figure 1 which is introduced for explanatory purposes, the ATM Adaptation Layer Type 1 (AAL1) enables the transfer of n x 64 kbit/s structured data between source and destination whilst preserving the structure information. In other words, where a repetitive frame of 'n' channels is to be transported every 125 microseconds, information indicating the start of frame is also transported so that the exact frame structure may be recovered at the destination.

Figure 1 shows the process used by AAL1 to provide the structured data transfer (SDT) capability. Frames of n x 64 kbit/s structured data arrive for transport every 125 microseconds. The example shows frames of less than 47 octets, so that consecutive octets from adjacent data structures are concatenated to form the payloads for consecutive AAL1 SAR-PDUs (segmentation and reassembly-protocol data units). For frames longer than 47 octets, the process is similar, with consecutive octets from one or two data structures being concatenated to form the payloads.

In figure 1, the following acronyms are employed:
CRC is the convergence sublayer indicator
SC is the sequence count
CRC is the cyclic redundancy check
P is the parity
Hdr is the SAR-PDU header
Ptr is the SAR-PDU pointer

The AAL1 SAR-PDU always starts with a 1-octet header containing the four fields shown. In addition, a SAR-PDU pointer field of 1-octet is inserted immediately after the Header by the transmitter once in every cycle of eight cells, but only when the sequence count value in the SAR-PDU header is even. The figure shows AAL1 SAR-PDUs containing the pointer field, located in AAL1 cells with sequence number values equal to 2 in this example. The presence of the pointer field is indicated by the value '1' carried by the CSI field of the SAR-PDU header. At all other times, i.e. for all odd values of sequence count and for even values of sequence count in non-Pointer cells, the CSI field is set to '0'. Note that the presence of the SAR-PDU pointer reduces the length of the SAR-PDU payload from 47 to 46 octets in those cells in which it appears.

The pointer is used at the first opportunity in a cycle of eight cells to indicate the first start of the structured block of n x 64 kbit/s channels following the end of the pointer field. This enables the start of the block structure to be recovered reliably at the receiver.

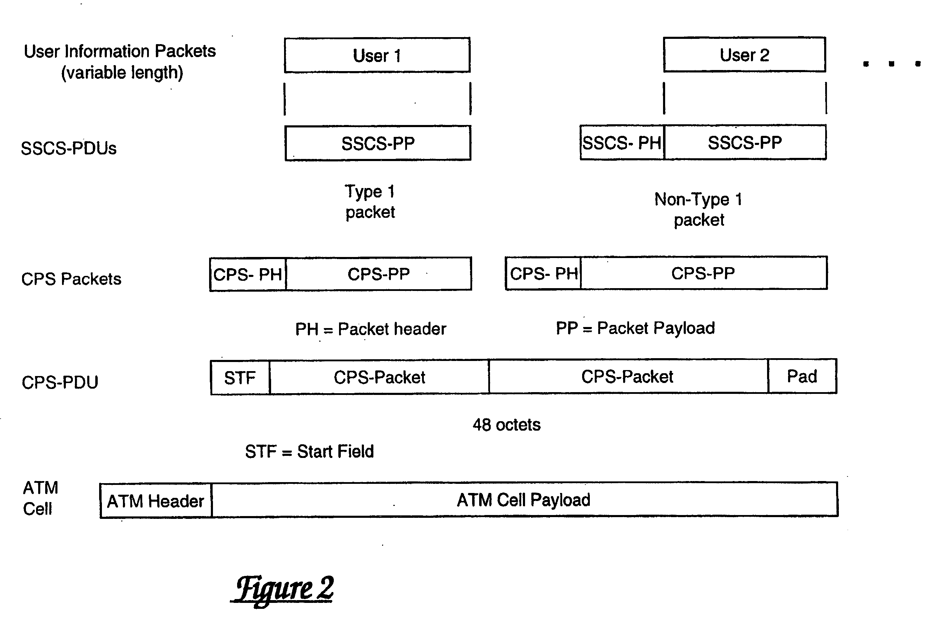

Referring now to figure 2 which is also introduced for explanatory purposes, the ATM Adaptation Layer Type 2 (AAL2) provides the ability to encapsulate and transport packets of user information inside an ATM cell stream. Packets from multiple users may be multiplexed onto a single ATM connection. These user packets consist, typically, of compressed voice information and vary in size from a few octets upwards, depending on the encoding algorithm in use. AAL2 permits packets of up to 45 octets to be carried by default with optional length of 64 octets. Longer packets must be segmented in a service specific convergence sublayer (SSCS) function prior to being handed down to the common part sublayer (CPS) of AAL2.

In figure 2, PH refers to the packet header, PP to the packet payload and STF to the start field.

Figure 2 shows the sequence of operations involved in the AAL2 packet transfer process used to encapsulate user packets into an ATM cell stream. As shown, user information packets of variable length are encapsulated into SSCS-PDUs. For the majority of information packets carried by AAL2, which will be routine voice (or voice and data) packets, the SSCS function is essentially null. This type of packet is referred to as Type 1 in Figure 2 and involves no addition of SSCS packet header (SSCS-PH) to the Type 1 packet. The UUI (user to user information) field in the CPS packet header identifies the Type 1 packets by means of one or more code point values. Other packet types (e.g. Types 2, 3 and 4) are possible in which extra protocol control information and/or error protection is a requirement. Figure 2 identifies this latter type of packet as 'non-Type 1'. The resulting extra fields appear in the SSCS-PH and the corresponding packet types are again identified as such by specific code points of the CPS packet header UUI field.

Following the SSCS process, the SSCS-PDUs are then encapsulated into CPS packets by the addition of CPS packet headers. A CPS packet thus consists of a CPS packet Header (CPS-PH) and a CPS packet payload (CPS-PP). The latter field has a length of from 1 to 45 (default maximum) octets. The CPS-PH of 3 octets consists of the following 4 fields:
- CID = Channel Identifier (8 bits)
- L1 = Length Indicator (6 bits)
- UUI = User-to-User Information (5 bits)
- HEC = Header Error Check (5 bits).

One or more CPS packets are concatenated and a start field (STF) plus possibly a padding field are added as shown to form the CPS-PDUs, which are the fixed length 48 octet ATM cell payloads.

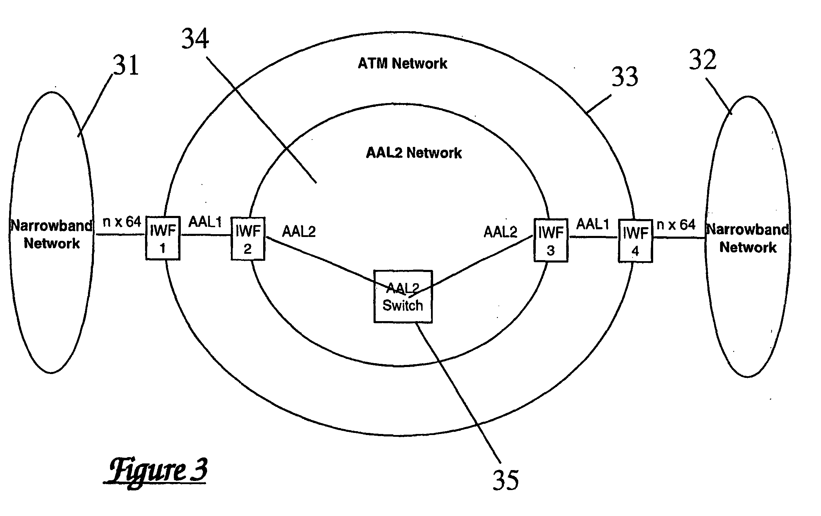

Figure 3 now shows an arrangement in which information being carried on an AAL1 cell stream is converted to an AAL2 cell stream. As shown in the figure, the arrangement provides for the transfer of structured data between narrow band networks 31, 32 via concatenated 'pure' ATM (33) and AAL2-based (34) ATM networks. Typically, the narrow band networks 31 and 32 will be time division multiplex (TDM) networks carrying voice and/ or data traffic. Switching of traffic within the AAL2-based network is performed by AAL2 switch 35. At the Interworking Function (IWF 1) between the narrow band network and the ATM network, the n x 64 kbit/s structured data is adapted using the SDT (structured data transfer) mechanism of AAL1. The structured data is then transported across the ATM network to the interworking function IWF 2 located at the boundary between the ATM network 33 and the AAL2 network 34. Here, the AAL1 structured data is converted by the interworking function IWF 2 to a suitable format for transport and switching by means of AAL2. On the other side of the AAL2 network 34, at the interworking function IWF 3, the data is converted back for transport via AAL1 over the 'pure' ATM network 33 to the interworking function IWF 4. Here, the structured data is converted back to its original TDM (time division multiplex) format for transport within the destination narrow band network.

There are a number of options by which the AAL1 structured data may be converted for transport via AAL2. Two preferred options involving segmentation of the AAL1 SAR-PDUs (segmentation and reassembly-protocol data units) are discussed below.

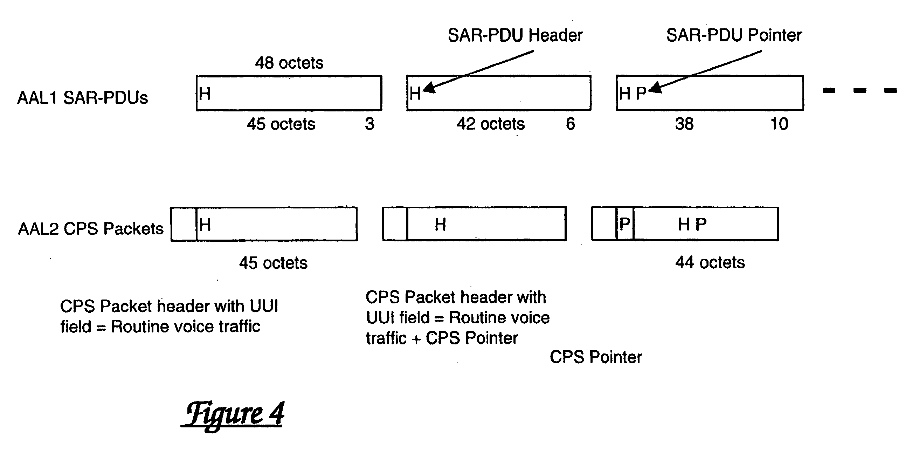

In this the first arrangement illustrated in figure 4, the stream of AAL1 SAR-PDUs is segmented in a simple manner and then encapsulated for transport by the AAL2 CPS. As shown in figure 4, the 48 octet AAL1 SAR-PDUs (segmentation and reassembly-protocol data units) are segmented as required to enable their formation into the maximum (default) size 45 octet AAL2 CPS packets. This entails concatenating 45 octets from one or two consecutive AAL1 SAR-PDUs and adding an AAL2 CPS (common part sublayer) header field of 3 octets to form the CPS packets. The figure shows the AAL1 segments being loaded into consecutive AAL2 packets; however, it will be appreciated that packets from other applications can be interposed in the AAL2 packet stream. This in no way affects the AAL1 segmentation process, since the any AAL2 packet carrying the AAL1 segments only carries segments from the same source. These segments are identified as such belonging to a given source by means of the unique value of the CID field carried in their AAL2 packet headers.

A requirement of the above segmentation process is that of identifying the start of a structured block of data within the AAL2 CPS packets. In AAL1, this identification is accomplished by the pointer field carried in every cycle of 8 cells as explained previously. However, the above segmentation process now causes the AAL1 SAR-PDU pointer to appear asynchronously to the start of the AAL2 packets carrying the AAL1 segments. Therefore, it is necessary to carry a further CPS pointer in the AAL2 CPS packet stream whose function is to locate the start of the AAL1 SAR-PDU pointer field. For this purpose, in addition to the Type 1 UUI code point(s) identifying routine voice (or voice and data) traffic, an extra unique UUI code point is used to signify routine traffic plus CPS pointer. The octet immediately following the CPS header carrying the new UUI codepoint is then used as the CPS pointer which locates the SAR-PDU pointer within the CPS packet. The data structure can thus be recovered at the receiver by reference to the SAR-PDU pointer.

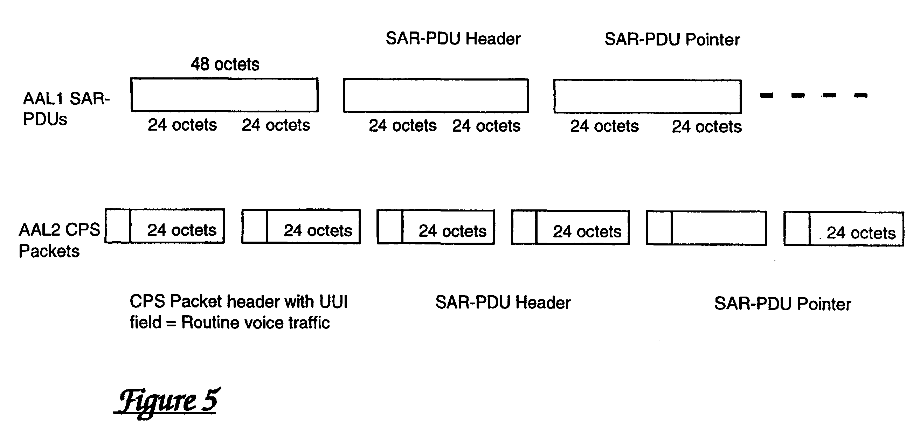

In a second embodiment, the stream of AAL1 SAR-PDUs is segmented such that the AAL1 SAR-PDU pointer is guaranteed to be synchronous with the start of the AAL2 CPS packets. This process is illustrated in Figure 5.

As shown in figure 5, the 48 octet AAL1 SAR-PDUs are segmented into 24 octet equal length segments. To each segment, an AAL2 CPS packet header is appended to form 27 octet long CPS packets. This segmentation process guarantees that the SAR-PDU pointer always occupies the second octet position that follows an AAL2 CPS packet header (the first octet position being occupied by the AAL1 SAR-PDU header).

Clearly, in the process of figure 5, the AAL1 SAR-PDU headers only appear in every second AAL2 CPS packet. However, the UUI fields in the CPS headers contain a sequence number of some modulus, e.g. 2 or 4 or 8 or 16. By ensuring that the SAR-PDU headers only appear in CPS packets containing even sequence numbers (or odd sequence numbers - it only matters that the transmitter and receiver both agree on which) the SAR-PDU Pointer can always be located at the receiver. This is simply a matter of identifying the SAR-PDU Headers with a CSI field carrying the value '1'. The SAR-PDU pointer is then located in the octet immediately following the header field and enables the data structure to be recovered at the receiver.

This segmentation process can be extended to segment lengths other than 24. Where the maximum AAL2 packet length is the default of 45 octets, any segment length that is a whole number divisor of 48 can be used successfully, except 48 itself (48 octet segments can be used in cases where the default maximum AAL2 packet length is 64 octets). For any segment length created by this rule, the result is that the AAL1 SAR-PDU header appears every 'N' AAL2 CPS packets, where 'N' is the integer divisor which provides the segment length. Again, providing that the SAR-PDU headers only appear in CPS packets with even sequence numbers, the SAR-PDU pointer can be recovered at the receiver.

Recovery may be simplified by ensuring that, at the start of transmission, the SAR-PDU Header appears in the CPS packet with sequence number '0' (or some other known value of sequence number). This provides a ready index from which counting to determine the position of the SAR-PDU pointer every 'N' packets can be carried out. However, note that the case of the 48 octet segments is special - here, the SAR-PDU header appears in every CPS packet, which makes the recovery of the SAR-PDU pointer particularly straightforward.

It will be understood that although the technique has been described above with particular reference to use with the AAL1 and AAL2 adaptation layers, it is of more general application. It will also be understood that various modifications and alterations might be made by those skilled in the art without departing from the scope of the invention.

## Claims

1. A method of transporting structured data comprising blocks or frames from a first narrow band network (31) to a second narrow band network (32) over an asynchronous network arrangement incorporating a first ATM network (33) having a first adaptation layer protocol, said first ATM network having embedded therein a second ATM network (34) having a second adaptation layer protocol, the method being **characterised by** the steps of:
at the first ATM network, segmenting the structured data into first ATM cells structured to said first protocol;
providing in one cell of a cycle of eight of said first ATM cells a pointer field indicating the start of a structured block or frame following the pointer field; :
at the second ATM network, segmenting said first ATM cells into second ATM cells structured to said second protocol; and
providing in said second ATM cells a further pointer, said further pointer identifying the position of said pointer field within the second ATM cells.

2. A method as claimed in claim 1, wherein said first ATM cells are segmented and encapsulated for transport in said second adaptation layer protocol such that said pointer field is synchronised to the start of said second ATM cells.

3. A method as claimed in claim 1 or 2, wherein the first ATM cells are segmented into common part sublayer CPS packets, each said packet being provided with a header field.

4. A method as claimed in claim 3, wherein said header field comprises three octets.

5. A method as claimed in claim 3, wherein the segmentation is such that a header of the first ATM cells is incorporated in every second CPS packet.

6. A method as claimed in claim 5, wherein the structured data comprises forty eight octet protocol data units, and wherein each said protocol data unit is segmented into two, twenty four octet segments.

7. A method as claimed in claim 6, wherein a pointer field occupies an octet position immediately following the header.

8. A method as claimed in claim 7, wherein said first ATM network comprises an ATM Adaptation Layer One, AAL1, type network and said second ATM network comprises an ATM Adaptation Layer Two, AAL2, type network.

## Patentansprüche

1. Verfahren zum Transport strukturierter Daten, die Blöcke oder Rahmen umfassen, von einem ersten Schmalband-Netz (31) zu einem zweiten Schmalband-Netz (32) über eine asynchrone Netzanordnung, die ein erstes ATM-Netz (33) mit einem ersten Anpassungsschicht-Protokoll beinhaltet, wobei in das erste ATM-Netz ein zweites ATM-Netz (34) mit einem zweiten Anpassungsschicht-Protokoll eingebettet ist, wobei das Verfahren durch die folgenden Schritte **gekennzeichnet** ist:
an dem ersten ATM-Netz, Segmentieren der strukturierten Daten in erste ATM-Zellen, die auf das erste Protokoll strukturiert sind;
Bereitstellen eines Zeigerfeldes, das den Anfang eines strukturierten Blockes oder Rahmens nachfolgend zu dem Zeigerfeld anzeigt, in einer Zelle eines Zyklus von acht der ersten ATM-Zellen,;
an dem zweiten ATM-Netz, Segmentieren der ersten ATM-Zellen in zweite ATM-Zellen, die auf das zweite Protokoll strukturiert sind; und
Bereitstellen eines weiteren Zeigers in den zweiten ATM-Zellen,, wobei der weitere Zeiger die Position des Zeigerfeldes in den zweiten ATM-Zellen identifiziert.

2. Verfahren nach Anspruch 1, bei dem die ersten ATM-Zellen für einen Transport in dem zweiten Anpassungsschicht-Protokoll derart segmentiert und eingekapselt sind, dass das Zeigerfeld auf den Anfang der zweiten ATM-Zellen synchronisiert ist.

3. Verfahren nach Anspruch 1 oder 2, bei dem die ersten ATM-Zellen in Gemeinteil-Teilschicht-CPS-Pakete segmentiert werden, wobei jedes Paket mit einem Anfangsblock-Feld versehen wird.

4. Verfahren nach Anspruch 3, bei dem das Anfangsblock-Feld drei Oktette umfasst.

5. Verfahren nach Anspruch 3, bei dem die Segmentierung derart ist, dass der Anfangsblock der ersten ATM-Zellen in jedes zweite CPS-Paket eingefügt ist.

6. Verfahren nach Anspruch 5, bei dem die strukturierten Daten achtundvierzig Oktett-Protokoll-Dateneinheiten umfassen, und bei dem jede Protokoll-Dateneinheit in zwei Segmente mit vierundzwanzig Oktetten segmentiert ist.

7. Verfahren nach Anspruch 6, bei dem ein Zeigerfeld eine Oktett-Position belegt, die unmittelbar auf den Anfangsblock folgt.

8. Verfahren nach Anspruch 7, bei dem das erste ATM-Netz ein ATM-Anpassungsschicht 1-, AAL1-, Typ-Netz umfasst und das zweite ATM-Netz ein ATM-Anpassungsschicht-2, AAL2-, Typ-Netz umfasst.

## Revendications

1. Un procédé pour transporter des données structurées comprenant des blocs ou des trames à partir d'un premier réseau à bande étroite (31) vers un second réseau à bande étroite (32) sur une structure de réseau asynchrone incorporant un premier réseau ATM (33) ayant un premier protocole de couche d'adaptation, ce premier réseau ATM englobant à l'intérieur de lui un second réseau ATM (34) ayant un second protocole de couche d'adaptation, le procédé étant **caractérisé par** les étapes suivantes :
au premier réseau ATM, on segmente les données structurées en premières cellules ATM structurées conformément au premier protocole;
on introduit dans une cellule d'un cycle de huit des premières cellules ATM un champ de pointeur indiquant le début d'un bloc ou d'une trame structuré qui suit le champ de pointeur;
au second réseau ATM, on segmente les premières cellules ATM en secondes cellules ATM structurées conformément au second protocole; et
on introduit un pointeur supplémentaire dans les secondes cellules ATM, ce pointeur supplémentaire identifiant la position du champ de pointeur dans les secondes cellules ATM.

2. Un procédé selon la revendication 1, dans lequel les premières cellules ATM sont segmentées et encapsulées pour le transport dans le second protocole de couche d'adaptation, de façon que le champ de pointeur soit synchronisé sur le début des secondes cellules ATM.

3. Un procédé selon la revendication 1 ou 2, dans lequel les premières cellules ATM sont segmentées en paquets de sous-couche de partie commune, CPS, chacun de ces paquets étant muni d'un champ d'en-tête.

4. Un procédé selon la revendication 3, dans lequel le champ d'en-tête comprend trois octets.

5. Un procédé selon la revendication 3, dans lequel la segmentation est telle qu'un en-tête des premières cellules ATM est incorporé dans un paquet CPS sur deux.

6. Un procédé selon la revendication 5, dans lequel les données structurées comprennent des unités de données de protocole à quarante-huit octets, et dans lequel chaque unité de données de protocole est segmentée en deux segments de vingt-quatre octets.

7. Un procédé selon la revendication 6, dans lequel un champ de pointeur occupe une position d'octet qui suit immédiatement l'en-tête.

8. Un procédé selon la revendication 7, dans lequel le premier réseau ATM est un réseau du type Couche d'Adaptation ATM Un, AAL1, et le second réseau ATM est un réseau du type Couche d'Adaptation ATM Deux, AAL2.
